# EUROPEAN PATENT APPLICATION

(11) **EP 2 677 501 A2**
(43) Date of publication of application: **25.12.2013**
(21) Application number: 13171869.4
(22) Date of filing: 13.06.2013
(51) Int. Cl.: G06T 11/60

(54) **Apparatus and method for changing images in electronic device**

(30) Priority: 19.06.2012 KR 20120065419
(71) Applicant: Samsung Electronics Co., Ltd, Gyeonggi-do 443-742 (KR)
(72) Inventor: Han, Sang Jin, Gyeonggi-do (KR); Ahn, Ji-Sung, Seoul (KR)
(74) Representative: Nederlandsch Octrooibureau

(57) **Abstract**

An apparatus and method for changing a background image or a lock screen image in an electronic device is provided. The method includes selecting a first screen image when a screen image change menu is selected, adjusting a size of the selected first screen image, disposing the first screen image on a corresponding area of a second screen image, and displaying a third screen image in which the first screen image and the second screen image are merged.

## Description

### BACKGROUND OF THE INVENTION

### 1. Field of the Invention:

The present invention relates to an electronic device. More particularly, the present invention relates to an apparatus and method for changing a background (e.g., wallpaper) image or a lock screen image in an electronic device.

### 2. Description of the Related Art:

As portable terminals have developed into necessaries for our daily lives, more and more user interfaces for the portable terminals have been variously developed. A technique for providing a menu list corresponding to various functions provided from each of the portable terminals and providing a menu list in a menu selection mode capable of allowing a user to select a desired menu is also one of the user interfaces. The technique may be classified into a text-type providing technique and a graphic-type providing technique.

In general, when a menu list is provided according to the graphic-type providing technique, a screen displayed in the menu selection mode includes a menu background image having a certain image, a menu list including the uppermost menus among a plurality of menus stored in the portable terminal, and a menu icon currently and temporarily selected on the menu list. If a key input, etc, for requesting determination and selection is generated from the user, in a state where a certain menu is temporarily selected and a corresponding menu icon is displayed, the temporarily selected menu is determined and selected and a detailed menu list of the menu is provided, or a corresponding function is executed. Herein, in general, a background or lock screen and a home screen may be configured as one image and may be changed by the user.

For example, when a background change menu or a lock screen change menu is selected by the user, he or she may select a corresponding image and may set the selected image itself to a background image or a lock screen image. Or, the user may crop a specific image and may set the cropped image to a background or a lock screen.

However, the user of a conventional portable terminal sets only one image or only a region generated by cropping a part of a certain image to a background or a lock screen. When the user merges several images and sets the merged image to a background or a lock screen, there is inconvenience in that he or she must edit the several images separately to generate one image and must set the generated image to a background or a lock screen.

As described above, when the user generates several images as an image of a collage type and sets the image of the collage type to a background or a lock screen, there is inconvenience when changing screen images (e.g., a background, a lock screen, a home screen, etc.) because there is a process of generating a new image through a separate editing process and setting the generated image to the background or a lock screen.

Therefore, a need exists for a system and method for merging a plurality of images and changing a background image or a lock screen image in a portable terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for merging a plurality of images and changing a background image or a lock screen image in a portable terminal.

Another aspect of the present invention is to provide an apparatus and method for merging a new image on an old screen image when setting a screen image.

In accordance with an aspect of the present invention, a method of changing a screen image in an electronic device is provided. The method includes selecting a first screen image when a screen image change menu is selected, adjusting a size of the selected first screen image, disposing the first screen image on a corresponding area of a second screen image, and displaying a third screen image in which the first screen image and the second screen image are merged.

In accordance with another aspect of the present invention, a method of changing a screen image in an electronic device is provided. The method includes sensing a screen image change event based on tag information of a first screen image, adjusting a size of the selected first screen image when the screen image change event is generated, disposing the first screen image on a corresponding area of a second screen image, and displaying a third screen image in which the first screen image and the second screen image are merged.

In accordance with another aspect of the present invention, an electronic device is provided. The electronic device includes one or more processors, a memory, and one or more programs, each of the one or more programs which is stored in the memory and is configured to be executable by the one or more processors, wherein each of the one or more programs includes instructions for selecting a first screen image when a screen image change menu is selected, adjusting a size of the selected first screen image, disposing the first screen image on a corresponding area of a second screen image, and displaying a third screen image in which the first screen image and the second screen image are merged.
In an exemplary embodiment of the present invention, the programs further includes instructions for merging the first screen image on the second screen image and storing the third screen image in which the first screen image and the second screen image are merged, the first screen image, the second screen image, and the third screen image are stacked up and stored in the memory by a stack structure.
In an exemplary embodiment of the present invention, the adjustment of the size of the first screen image is performed by resizing the first screen image to have a size which is smaller than that of the second screen image.
In an exemplary embodiment of the present invention, the adjustment of the size of the first screen image is performed by cropping a part of the first screen image to have a size which is smaller than that of the second screen image.
In an exemplary embodiment of the present invention, the programs further includes an instruction for replacing the third screen image in which the first screen image and the second screen image are merged with the second screen image.
In an exemplary embodiment of the present invention, a location where the first screen image is disposed on the corresponding area of the second screen image is at least one of specified by a user, determined randomly, and determined according to a blank area of the second screen image.
In an exemplary embodiment of the present invention, the screen image comprises at least one of an image for a background, an image for a lock screen, and an image for a home screen.
In an exemplary embodiment of the present invention, the first screen image comprises at least one of an image photographed through a camera, a tagged image, and a favorite image.

In accordance with another aspect of the present invention, an electronic device is provided. The electronic device includes one or more processors, a memory, and one or more programs, each of the one or more programs which is stored in the memory and is configured to be executable by the one or more processors, wherein each of the one or more programs includes instructions for sensing a screen image change event based on tag information of a first screen image, adjusting a size of the selected first screen image when the screen image change event is generated, disposing the first screen image on a corresponding area of a second screen image, and displaying a third screen image in which the first screen image and the second screen image are merged.
In an exemplary embodiment of the present invention, the programs further includes instructions for merging the first screen image on the second screen image and storing the third screen image in which the first screen image and the second screen image are merged,
In an exemplary embodiment of the present invention, the first screen image, the second screen image, and the third screen image are stacked up and stored in the memory by a stack structure.
In an exemplary embodiment of the present invention, the adjustment of the size of the first screen image is performed by resizing the first screen image to have a size which is smaller than that of the second screen image.
In an exemplary embodiment of the present invention, the adjustment of the size of the first screen image is performed by cropping a part of the first screen image to have a size which is smaller than that of the second screen image.
In an exemplary embodiment of the present invention, the programs further includes an instruction for replacing the third screen image in which the first screen image and the second screen image are merged with the second screen image.
In an exemplary embodiment of the present invention, a location where the first screen image is disposed on the corresponding area of the second screen image is at least one of specified by a user, determined randomly, and determined according to a blank area of the second screen image.
In an exemplary embodiment of the present invention, the screen image comprises at least one of an image for a background, an image for a lock screen, and an image for a home screen.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of an apparatus for changing a screen image in an electronic device according to an exemplary embodiment of the present invention;

FIG. 2 is a block diagram illustrating a configuration of an application processor according to an exemplary embodiment of the present invention;

FIG. 3 is a flowchart illustrating a process of changing a screen image in an electronic device according to an exemplary embodiment of the present invention;

FIG. 4 is a flowchart illustrating a process of changing a screen image using a photographed image in an electronic device according to an exemplary embodiment of the present invention;

FIGs. 5A to 5C illustrate a process of resizing a new screen image and merging the resized screen image on an old screen image according to an exemplary embodiment of the present invention;

FIGs. 6A to 6C illustrate a process of cropping a part of a new screen image and merging the cropped screen image on an old screen image according to an exemplary embodiment of the present invention;

FIG. 7A illustrates a process of specifying a location of a new screen image on an old screen image according to an exemplary embodiment of the present invention;

FIG. 7B illustrates a process of moving a location of a new screen image on an old screen image according to an exemplary embodiment of the present invention;

FIG. 8A illustrates a process of specifying a location of a new screen image on an old screen image according to an exemplary embodiment of the present invention;

FIG. 8B illustrates a process of moving a location of a new screen image on an old screen image according to an exemplary embodiment of the present invention; and

FIG. 9 illustrates a process of merging a new screen image on an old screen image according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Hereinafter, a description will be given for an exemplary apparatus and method for changing images such as a lock screen, a home screen, and a background in an electronic device.

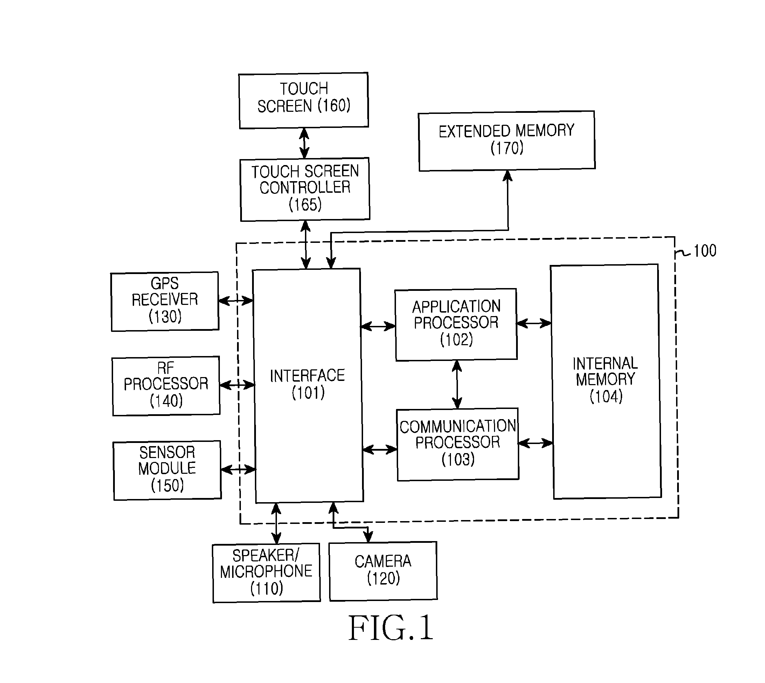

FIG. 1 is a block diagram illustrating a configuration of an apparatus for changing a screen image in an electronic device according to an exemplary embodiment of the present invention.

Referring to FIG. 1, the electronic device may be a portable electronic device. That is, the electronic device may be any of various apparatuses such as a portable terminal, a mobile phone, a mobile pad, a media player, a tablet computer, a handheld computer, a Personal Digital Assistant (PDA), and the like. The electronic device may be a certain portable electronic device including a device in which two or more functions are combined among these apparatuses.

The electronic device may include a controller 100, a speaker/microphone 110, a camera 120, a Global Positioning System (GPS) receiver 130, a Radio Frequency (RF) processor 140, a sensor module 150, a touch screen 160, a touch screen controller 165, and an extended memory 170.

The controller 100 may include an interface 101, an application processor 102, a communication processor 103, and an internal memory 104. In some cases, the entire controller 100 is referred to as a processor. The interface 101, the application processor 102, the communication processor 103, and the internal memory 104 may be separately configured or may be integrated in one or more Integrated Circuits (ICs).

The application processor 102 executes several software programs and performs several functions for the electronic device. The communication processor 103 performs a process and control for voice communication and data communication. In addition to the general function, the application processor 102 and the communication processor 103 play a role in executing a specific software module (instruction set) stored in the extended memory 170 or the internal memory 104 and performing several specific functions corresponding to the specific software module. That is, the application processor 102 and the communication processor 103 interwork with software modules stored in the extended memory 170 or the internal memory 104 and perform a method according to an exemplary embodiment of the present invention.

In an exemplary embodiment of the present invention, when a screen image change menu is selected, the application processor 102 selects a new screen image to replace an old screen image and verifies whether a user wants to merge the new screen image on the old screen image. When the user wants to merge the new screen image on the old screen image, the application processor 102 performs a function (hereinafter, referred to as a crop function) for cropping a part of the new screen image or a function (hereinafter, referred to as a resizing function) for resizing the new screen image. On the other hand, if the user does not want to merge the new screen image on the old screen image, the application processor 102 performs a corresponding mode. For one example, the application processor 102 replaces the old screen image with the new screen image in the corresponding mode without merging the new screen image on the old screen image. For another example, the application processor 102 maintains the old screen image instead of the new screen image in the corresponding mode.

The application processor 102 specifies a location of the cropped or resized new screen image on the old screen image. For example, the location where the cropped or resized new screen image will be merged on the old screen image may be determined by allowing the user to select a certain point in the old screen image. For another example, the location may be determined randomly or may be determined automatically on a blank area of the old screen image. For another example, the location may be previously specified by the user. For another example, the location may be automatically specified through inspection of a blank area of the old screen image. Herein, the blank area may be determined in consideration of a histogram, complexity, etc. of the old screen image.

On the other hand, when specifying the location of the cropped or resized new screen image on the old screen image, the application processor 102 performs a translucent processing of the old screen image to be shown after the cropped or resized new screen image. Accordingly, the user may specify the location more easily.

In addition, the application processor 102 previews the cropped or resized new screen image on the old screen image. The application processor 102 merges the cropped or resized new screen image on the old screen image. At this time, the merged screen image is stored in the extended memory 170 or the internal memory 104. The old screen image, the new screen image, and the merged screen image maintain a matching relation with one another such that the user restores the merged screen image to the previous old screen image more easily. The application processor 102 replaces the merged screen image with a background image, a lock screen image, or a home screen image.

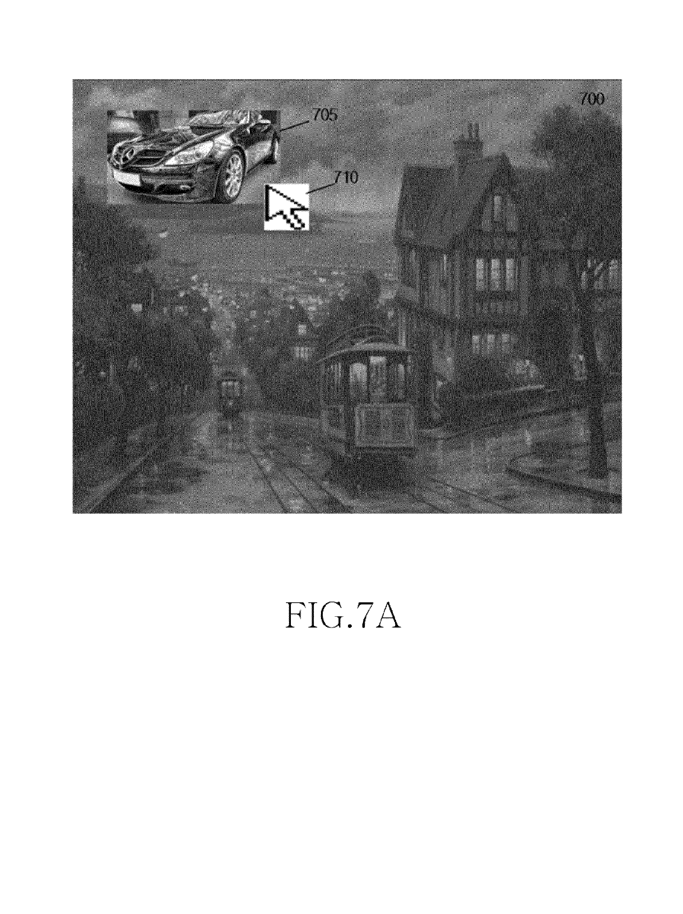

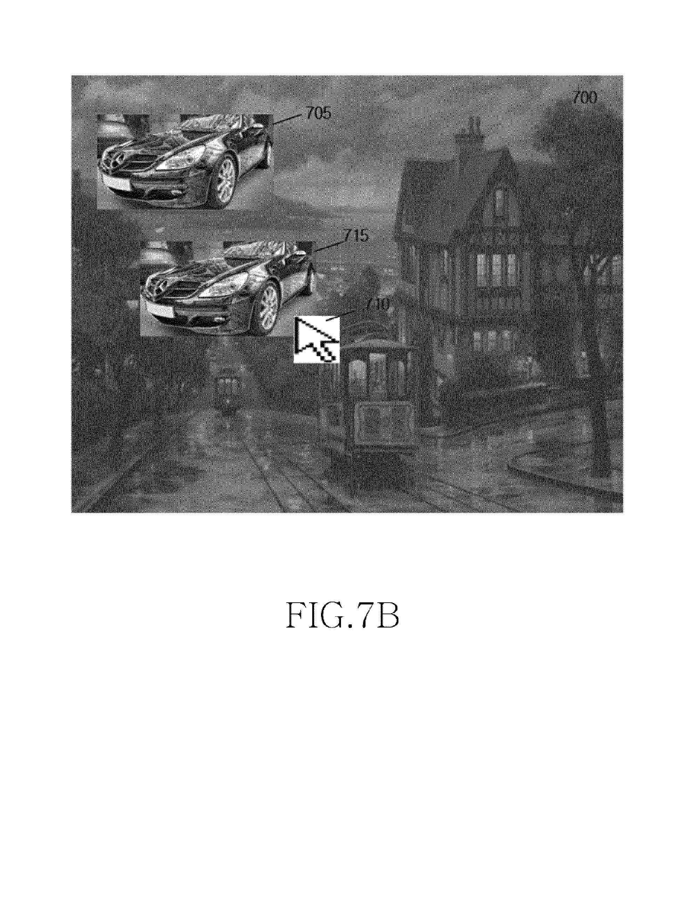

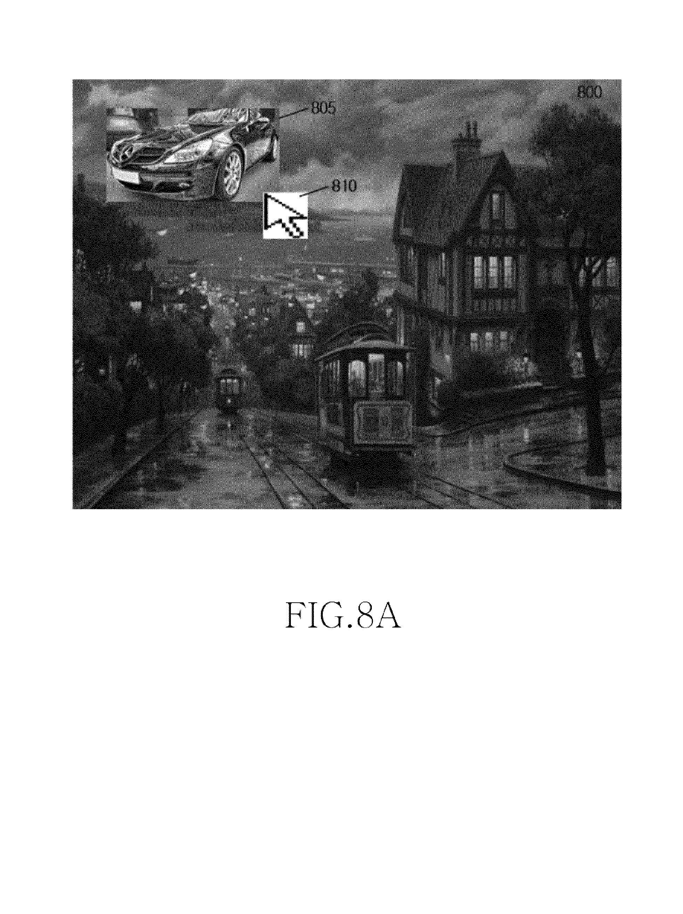

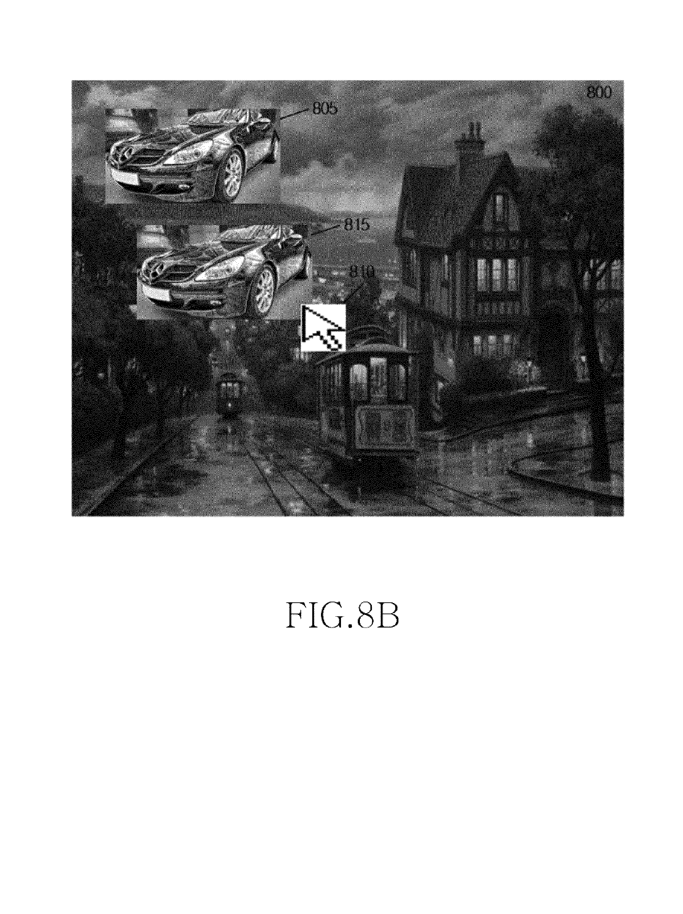

In another exemplary embodiment of the present invention, an application processor photographs an object through the camera 120 and resizes the photographed image. The application processor locates the resized image at a certain point on an old screen image background. Herein, a screen image is an image used on a background, a lock screen, or a home screen, etc. A screen image according to an exemplary embodiment of the present invention is not limited to an image used on a background, a lock screen, or a home screen, etc. For example, a location where the resized new screen image will be merged on the old screen image may be determined by allowing a user to select a certain point on the old screen image. For another example, the location may be determined randomly or may be determined automatically on a blank area of the old screen image (refer to FIGs. 7A and 7B and FIGs. 8A and 8B described below). For another example, the location may be previously specified by the user. For another example, the location may be automatically specified through inspection of a blank area of the old screen image. Herein, the blank area may be determined in consideration of a histogram, complexity, etc. of the old screen image. An algorithm for checking the black area of the old screen image departs from the scope of the present invention.

On the other hand, when specifying the location of the resized new screen image on the old screen image, the application processor performs a translucent processing of the old screen image to be shown after the resized new screen image. Accordingly, the user may specify the location more easily.

Also, the application processor previews the resized new screen image on the old screen image. That is, the application processor shows a screen image in which the resized new screen image is merged on an old image background to the user before merging the new screen image on the old screen image. The application processor merges the cropped or resized new screen image on the old screen image. At this time, the merged screen image may be stored in a memory/disc. The old screen image, the new screen image, and the merged screen image maintain a matching relation with one another such that the user restores the merged screen image to the previous old screen image more easily. The application processor replaces the merged screen image with a background image, a lock screen image, or a home screen image.

On the other hand, another processor (not shown) may include one or more data processors, an image processor, and a codec. The one or more data processors, the image processor, and the codec may be separately configured. Also, the one or more data processors, the image processor, and the codec may be configured as several processors which perform different functions. The interface 101 connects the application processor 102 and the communication processor 103 to the touch screen controller 165 and the extended memory 170.

The sensor module 150 may be combined with the interface 101 and may perform several functions. For example, a motion sensor and an optical sensor may be combined to the interface 101, may sense motion of the electronic device, and may sense light from the outside, respectively. In addition, a position measurement system and other sensors such as a temperature sensor and a bio-sensor may connect to the interface 150 and may perform related functions.

The camera 120 may be combined with the sensor module 150 through the interface 120 and may perform a camera function like a photo and video clip recording function.

The RF processor 140 performs a communication function. For example, the RF processor 140 converts an RF signal into a baseband signal and provides the baseband signal to the communication processor 103 under control of the communication processor 103. Or, the RF processor 140 converts a baseband signal from the communication processor 103 into an RF signal and transmits the converted RF signal. Herein, the communication processor 103 processes a baseband signal using various communication methods. For example, the various communication methods, may include, but are not limited to, a Global System for Mobile communication (GSM) communication method, an Enhanced Data GSM Environment (EDGE) communication method, a Code Division Multiple Access (CDMA) communication method, a Wideband-CDMA (W-CDMA) communication method, a Long Term Evolution (LTE) communication method, an Orthogonal Frequency Division Multiple Access (OFDMA) communication method, a Wireless Fidelity (Wi-Fi) communication method, a WiMax communication method, or/and a Bluetooth communication method.

The speaker/microphone 110 may be responsible for inputting and outputting an audio stream, such as a voice recognition function, a voice copy function, a digital recording function, and a phone call function. That is, the speaker/microphone 110 converts a voice signal into an electric signal or converts an electric signal into a voice signal. Although it is not shown in FIG. 1, an attachable and detachable earphone, headphone, or headset may connect to the electronic device through an external port.

The touch screen controller 165 may be coupled to the touch screen 160. The touch screen 160 and the touch screen controller 165 may detect, but are not limited to, contact and motion or stopping of the same using any of capacitive, resistive, infrared ray, and surface acoustic wave technologies for determining one or more contact points or a certain multi-touch sensing technology including other proximity sensor arrangement or other elements.

The touch screen 160 provides an input/output interface between the electronic device and the user. That is, the touch screen 160 transmits touch input of the user to the electronic device. Also, the touch screen 160 is a medium for displaying output from the electronic device to the user. That is, the touch screen 160 displays visual output to the user. This visual output has a text type, a graphic type, a video type, or a combined type.

In an exemplary embodiment of the present invention, the electronic device outputs a merged image in which a new screen image is disposed on an old screen image or outputs an application screen for specifying a location of a new screen image to be disposed in an old screen image, through a screen. This screen may be a touch screen for processing touch input.

The touch screen 160 may be any of several displays. For example, the touch screen 160 may be, but is not limited to, a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), a Flexible LED (FLED), and the like.

The GPS receiver 130 converts a signal received from an artificial satellite into information such as a position, a speed, and time. For example, distance between a satellite and the GPS receiver 130 is calculated by multiplying velocity of light and time of arrival together. Accurate positions and distance of three satellites are obtained and a position of the electronic device is measured using the well-known trilateration method.

The extended memory 170 or the internal memory 104 may include a high-speed Random Access Memory (RAM) such as one or more magnetic storages, a non-volatile memory, one or more optical storages, and/or a flash memory (e.g., a NAND flash memory or a NOR flash memory).

The extended memory 170 or the internal memory 104 stores software components. The software components include an Operating System (OS) software module, a communication software module, a graphic software module, a user interface software module, a CODEC software module, a camera software module, one or more application software modules, etc. Also, the modules which are the software components may be expressed in a set of instructions. Accordingly, the modules are expressed in an instruction set. Also, the modules are expressed in programs.

The OS software module includes several software components for controlling a general system operation. For example, control of this general system operation means memory management and control, storage hardware (device) control and management, power control and management, etc. This OS software module also performs a function for smoothly communicating between several hardware (devices) and software components (modules).

The communication software module may communicate with other electronic devices such as a computer, a server, and/or a portable terminal through the RF processor 140. The communication software module is equipped with a protocol structure corresponding to a corresponding communication method.

The graphic software module includes several software components for providing and displaying graphics on the touch screen 160. The term "graphics" means that texts, web pages, icons, digital images, videos, animations, etc. are included.

The user interface software module includes several software components related to a user interface. The user interface software module includes contents about whether a state of a user interface is changed to any state, whether a state of a user interface is changed in any condition, etc.

The camera software module includes cameral-related software components capable of performing camera-related processes and functions.

The application software module includes a browser function, an email function, an instant message function, a word processing function, a keyboard emulation function, an address book function, a touch list function, a widget function, a Digital Right Management (DRM) function, a voice recognition function, a voice copy function, a position determining function, a location based service function, etc. The extended memory 170 or the internal memory 104 may include additional software modules (instructions) in addition to the above-described software modules. Or, if necessary, the extended memory 170 or the internal memory 104 may not use some software modules (instructions).

In accordance with an exemplary embodiment of the present invention, the application software module includes an instruction for performing a function for changing a background image, a lock screen image, and a home screen image.

When the user selects a screen image change menu, the instruction according to an exemplary embodiment of the present invention selects a new screen image to replace an old screen image and verifies whether the user wants to merge the new screen image on the old screen image. When the user wants to merge the new screen image on the old screen image, the instruction performs a crop function for cropping a part of the new screen image or a resizing function for resizing the new screen image. On the other hand, if the user does not want to merge the new screen image on the old screen image, the instruction performs a corresponding mode. The instruction specifies a location of the cropped or resized new screen image on the old screen image. Also, the instruction previews the cropped or resized new screen image on the old screen image. That is, the instruction shows a screen image in which the cropped or resized new screen image is merged on an old image background before the user merges the new screen image on the old screen image, and merges the cropped or resized new screen image on the old screen image.

When the user photographs an object through the camera 120, an instruction according to an exemplary embodiment of the present invention resizes the photographed image and locates the resized image at a certain point on an old screen image background. The instruction previews the resized new screen image on an old screen image and merges the resized new screen image on the old screen image.

Also, a variety of functions of the electronic device, which are described above or to be described later, may be executed by one or more streaming processing, hardware including an Application Specific Integrated Circuit (ASIC), software, and/or combination of them.

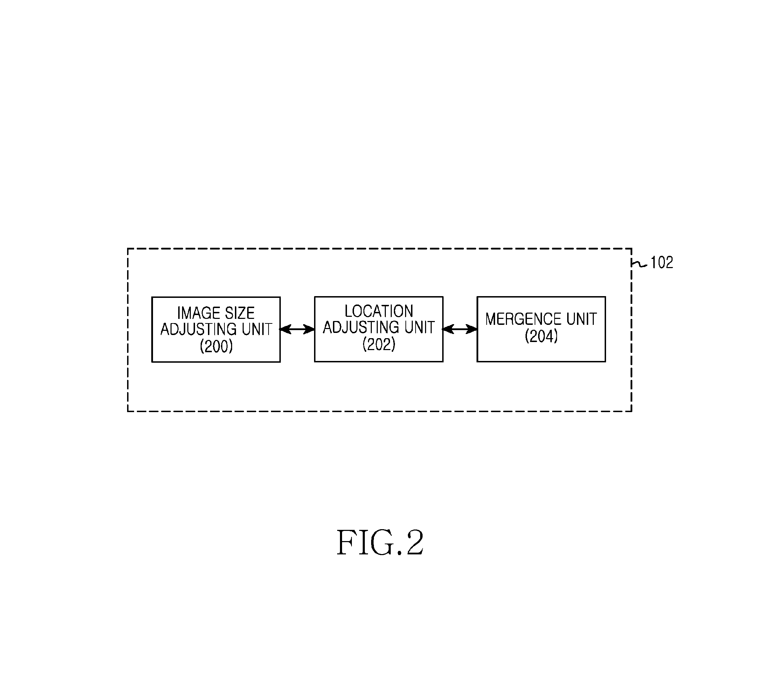

FIG. 2 is a block diagram illustrating a configuration of an application processor according to an exemplary embodiment of the present invention.

Referring to FIG. 2, when changing a screen image, an image size adjusting unit 200 adjusts a size of a new image to be disposed on an old screen image background. For example, the image size adjusting unit 200 resizes the new screen image or crops a part of the new screen image, and adjusts the size of the new screen image. A location adjusting unit 202 determines a location where the new screen image will be disposed on the old screen image. For example, the location where the new screen image will be disposed on the old screen image may be specified by a user, may be determined randomly, or may be automatically determined by searching a blank area of the old screen image. A mergence unit 204 merges the disposed new screen image on the old screen image background.

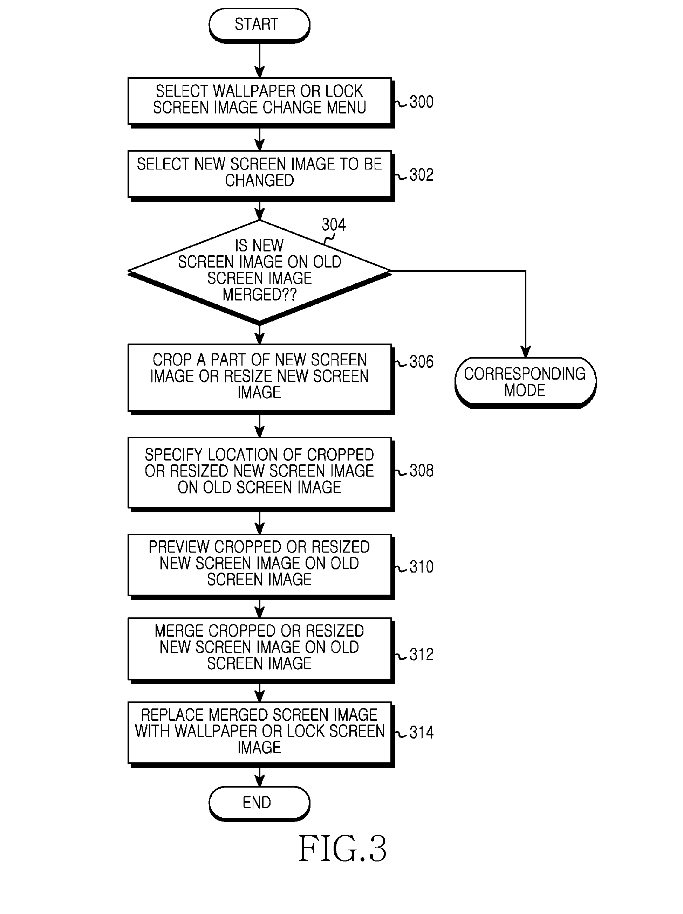

FIG. 3 is a flowchart illustrating a process of changing a screen image in an electronic device according to an exemplary embodiment of the present invention.

Referring to FIG. 3, a user of the electronic device selects a screen image change menu in step 300. Herein, a screen image is an image used on a background, a lock screen, or a home screen, etc. Of course, it is to be understood that a screen image according to an exemplary embodiment of the present invention is not limited to an image used on a background, a lock screen, or a home screen, etc.

The user of the electronic device selects a new screen image to replace an old screen image in step 302. The new screen image may be an image previously stored in a memory or may be an image photographed through a camera of the electronic device.

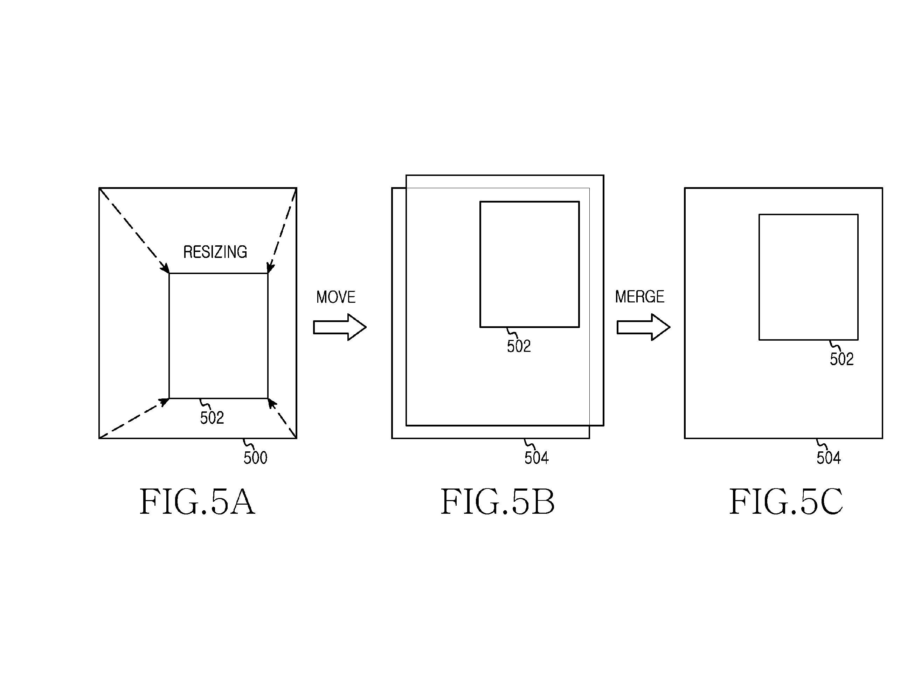

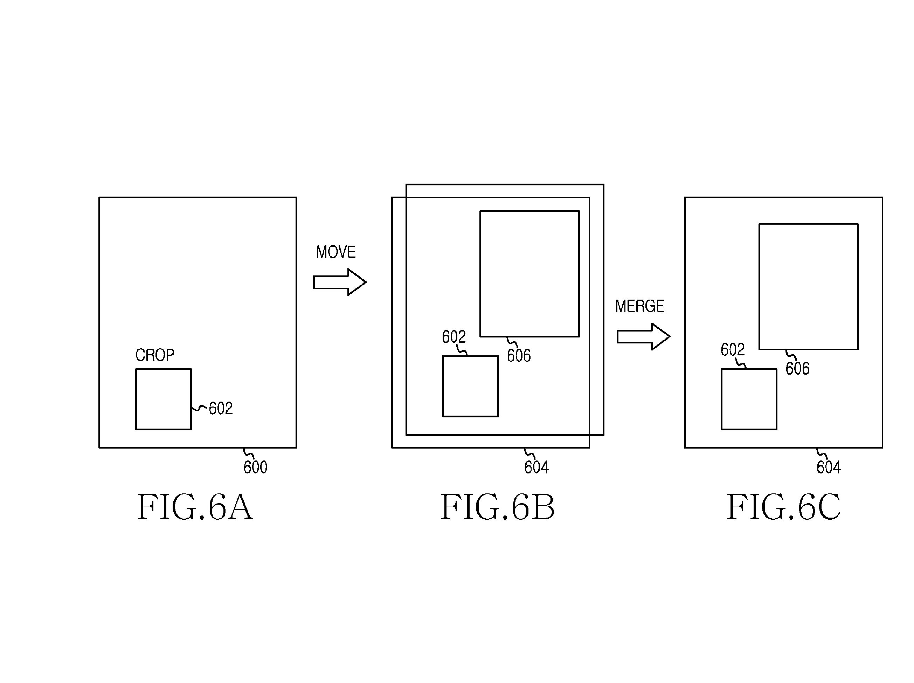

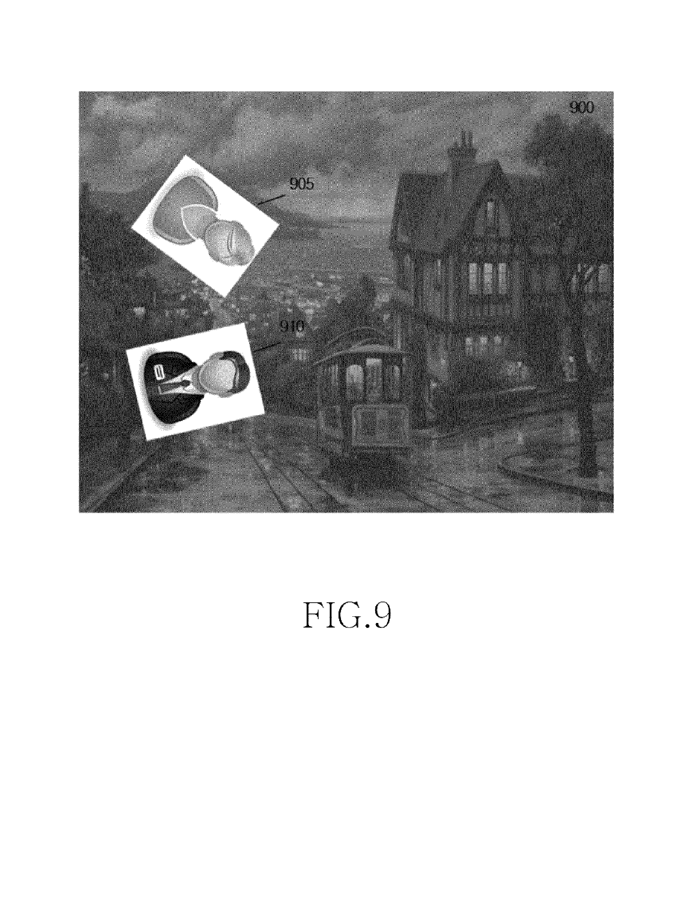

The electronic device verifies whether a user wants to merge the new screen image on the old screen image in step 304. When the user wants to merge the new screen image on the old screen image in step 304, the electronic device proceeds to step 306 and performs a crop function for cropping a part of the new screen image or a resizing function for resizing the new screen image. That is, to crop or resize the new screen image is to adjust the new screen image such that the new screen image is located on an old screen image background. The crop function and the resizing function will be described in more detail later with reference to FIGs. 5A to 5C and FIGs. 6A to 6C. In addition to the crop function and the resizing function, the user may rotate an image (refer to FIG. 9 described below).

On the other hand, if the user does not want to merge the new screen image on the old screen image, the electronic device performs a corresponding mode. As an example, the electronic device replaces the old screen image with the new screen image in the corresponding mode without merging the new screen image on the old screen image. As another example, the electronic device maintains the old screen image instead of the new screen image in the corresponding mode.

The electronic device specifies a location of the cropped or resized new screen image on the old screen image in step 308. As an example, the location where the cropped or resized new screen image will be merged on the old screen image may be determined by allowing the user to select a certain point on the old screen image. As another example, the location may be determined randomly or may be determined automatically on a blank area of the old screen image (refer to FIGs. 7A and 7B and FIGs. 8A and 8B described below).

As another example, the location may be previously specified by the user. As yet another example, the location may be automatically specified through inspection of a blank area of the old screen image. Herein, the blank area may be determined in consideration of a histogram, complexity, etc. of the old screen image.

An algorithm for checking a black area of the old screen image departs from the scope of the present invention.

On the other hand, when specifying the location of the cropped or resized new screen image on the old screen image, the electronic device performs a translucent processing of the old screen image to be shown after the cropped or resized new screen image. Accordingly, the user may specify the location more easily (refer to FIGs. 7A and 7B and FIGs. 8A and 8B described below).

The electronic device previews the cropped or resized new screen image on the old screen image in step 310. That is, the electronic device shows a screen image in which the cropped or resized new screen image is merged on the old screen image background to the user before he or she merges the new screen image on the old screen image.

The electronic device merges the cropped or resized new screen image on the old screen image in step 312. At this time, the merged screen image is stored in a memory. The old screen image, the new screen image, and the merged screen image maintain a matching relation with one another such that the user restores the merged screen image to the previous old screen image more easily (not shown). That is, the old screen image, the new screen image, and the merged screen image are stacked up and stored in the memory by a stack structure. For this reason, the old screen image, the new screen image, and the merged screen image may be successively rendered.

Although it is not shown in FIG. 3, the user may add and draw colors or lines on the merged screen image. The merged screen image after being changed and the merged screen image before being changed are stacked up and stored in the memory by a stack structure.

The electronic device replaces a background image, a lock screen image, or a home screen image with the merged screen image in step 314.

Thereafter, the electronic device ends the algorithm of FIG. 3.

In addition to the exemplary embodiment of the present invention shown in FIG. 3 for allowing the user to select a menu and change a screen image, when photographing an object through a camera of the electronic device, the electronic device may merge the photographed image on an old screen image automatically and may replace the merged screen image with a screen image.

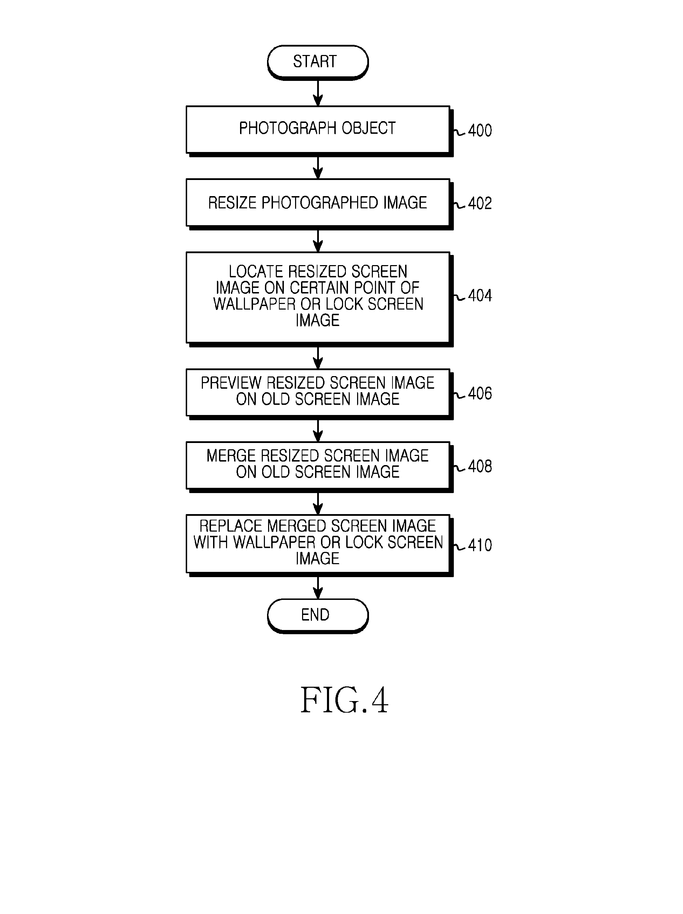

FIG. 4 is a flowchart illustrating a process of changing a screen image using a photographed image in an electronic device according to an exemplary embodiment of the present invention.

Referring to FIG. 4, a user of the electronic device photographs an object through a camera of the electronic device in step 400.

The electronic device resizes the photographed image in step 402.

The electronic device locates the resized image at a certain point on an old screen image background in step 404. Herein, a screen image is an image used on a background, a lock screen, or a home screen, etc. Of course, it is to be understood that a screen image according to an exemplary embodiment of the present invention is not limited to an image used on a background, a lock screen, or a home screen, etc.

To resize the photographed image is to adjust a size of the image such that a new screen image is located on the old screen image background (refer to FIGs. 6A to 6C described below).

As an example, a location where the resized new screen image will be merged on the old screen image may be determined by allowing a user to select a certain point on the old screen image. As another example, the location may be determined randomly or may be determined automatically on a blank area of the old screen image (refer to FIGs. 7A and 7B and FIGs. 8A and 8B described below).

As another example, the location may be previously specified by the user. As yet another example, the location may be automatically specified through inspection of a blank area of the old screen image. Herein, the blank area may be determined in consideration of a histogram, complexity, etc. of the old screen image. An algorithm for checking the black area of the old screen image departs from the scope of the present invention.

On the other hand, when specifying the location of the resized new screen image on the old screen image, the electronic device performs a translucent processing of the old screen image to be shown after the resized new screen image. Accordingly, the user may specify the location more easily (refer to FIGs. 7A and 7B and FIGs. 8A and 8B described below).

The electronic device previews the resized new screen image on the old screen image in step 406. That is, the electronic device shows a screen image in which the resized new screen image is merged on an old image background to the user before he or she merges the new screen image on the old screen image.

The electronic device merges the resized new screen image on the old screen image in step 408. At this time, the merged screen image is stored in a memory. The old screen image, the new screen image, and the merged screen image maintain a matching relation with one another such that the user restores the merged screen image to the previous old screen image more easily (not shown).

The electronic device replaces the merged screen image with a background image, a lock screen image, or a home screen image in step 410.

The electronic device ends the algorithm of FIG. 4.

The electronic device in FIG. 4 changes a screen image when photographing an object through the camera. However, an electronic device according to an exemplary embodiment of the present invention may merge a tagged image or a favorite image on an old screen image automatically when tagging the image or setting the favorite image.

FIGs. 5A to 5C illustrate a process of resizing a new screen image and merging the new screen image on an old screen image according to an exemplary embodiment of the present invention.

Referring to FIG. 5A, a new screen image 500 (an image photographed through a camera, a previously stored image, a tagged image, a favorite image of a user, and the like) is resized to a resized screen image 502. Referring to FIG. 5B, the resized screen image 502 is disposed on a certain location of an old screen image 504. At this time, a translucent processing of the old screen image 504 may be performed. Herein, the location of the resized screen image 502 disposed on the old screen image 504 may be selected by designation of a user or may be automatically specified in consideration of a blank area on the old screen image 504. Referring to FIG. 5C, in conclusion, the resized screen image 502 and the old screen image 504 are merged.

FIGs. 6A to 6C illustrate a process of cropping a part of a new screen image and merging the cropped screen image on an old screen image according to an exemplary embodiment of the present invention.

Referring to FIG. 6A, a part of a new screen image 600 (an image photographed through a camera, a previously stored image, a tagged image, a favorite image of a user, and the like) is cropped to a cropped screen image 602. Referring to FIG. 6B, the cropped screen image 602 is disposed on a certain location of an old screen image 604. The old screen image 604 includes a resized screen image 606. At this time, a translucent processing of the old screen image 604 may be performed. Herein, the location of the cropped screen image 602 disposed on the old screen image 604 may be selected by designation of the user or may be automatically specified in consideration of a blank area on the old screen image 604. Referring to FIG. 6C, in conclusion, the cropped screen image 602 and the old screen image 604 are merged.

FIG. 7A illustrates a process of specifying a location of a new screen image on an old screen image according to an exemplary embodiment of the present invention.

Referring to FIG 7A, a location of a cropped or resized image 705 on an old screen image 700 is determined by allowing a user to specify a certain point 710 (or specify an area to dispose a new image). For example, the location may be set by automatically checking a blank area of the old screen image 700 instead of allowing the user to specify the certain point 710. Also, a translucent processing of the old screen image 700 may be performed.

FIG. 7B illustrates a process of moving a location of a new screen image on an old screen image according to an exemplary embodiment of the present invention.

Referring to FIG. 7B, a location of a cropped or resized image 705 on an initial old screen image 700 may be moved to another location 715 by designation of a certain point 710 of a user before the cropped or resized image 705 is merged on the old screen image 700.

FIG. 8A illustrates a process of specifying a location of a new screen image on an old screen image according to an exemplary embodiment of the present invention.

Referring to FIG 8A, a location of a cropped or resized image 805 on an old screen image 800 is determined by allowing a user to specify a certain point 810 (or specify an area to dispose a new image). For example, the location may be set by automatically checking a blank area of the old screen image 800 instead of allowing the user to specify the certain point 810. Also, a translucent processing of the old screen image 800 may not be performed.

FIG. 8B illustrates a process of moving a location of a new screen image on an old screen image according to an exemplary embodiment of the present invention.

Referring to FIG. 8B, a location of a cropped or resized image 805 on an initial old screen image 800 may be moved to another location 815 by designation of a certain point 810 of a user before the cropped or resized image 805 is merged on the old screen image 800.

FIG. 9 illustrates a process of merging a new screen image on an old screen image according to an exemplary embodiment of the present invention.

Referring to FIG. 9, when a user specifies a certain point on an initial old screen image 900 or when a blank area of the old screen image 900 is automatically detected, portraits 905 and 910 are disposed on the old screen image 900. In addition, the user may rotate the portraits 905 and 910. The portraits 905 and 910 may be images photographed through a camera or may be obtained through a web page such as a web album of Facebook, etc.

As described above, exemplary embodiments of the present invention provide an advantage in that the user may set an image of a collage type to a screen image more easily by reducing an image size at an image viewer, etc., disposing the reduced image on a specific location of an old screen image, and merging the reduced screen image on the old screen image.

Also, the user need not edit several images in advance using a separate edit application, etc., generate one image, and set the generated image to a background or lock screen but instead resize or crop images at the time point of changing a screen image, dispose the resized or cropped image on an old screen image, and change the screen image immediately.

Also, the user may merge a photographed image, a tagged image, a favorite image, etc. on an old screen image automatically while being classified according to categories.

In conclusion, the user may add new images on an old background image one by one and may display the images by a slide type by specifying a size and a position of an image at a desired time point or periodically and merging the image on an old screen image.

While the present invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A method of changing a screen image in an electronic device, the method comprising:
selecting a first screen image when a screen image change menu is selected;
adjusting a size of the selected first screen image;
disposing the first screen image on a corresponding area of a second screen image; and
displaying a third screen image in which the first screen image and the second screen image are merged.

2. The method of claim 1, further comprising:
merging the first screen image on the second screen image; and
storing the third screen image in which the first screen image and the second screen image are merged,
wherein the first screen image, the second screen image, and the third screen image are stacked up and stored in a memory by a stack structure.

3. The method of claim 1, wherein the adjustment of the size of the first screen image comprises resizing the first screen image to have a size which is smaller than that of the second screen image.

4. The method of claim 1, wherein the adjustment of the size of the first screen image comprises cropping a part of the first screen image to have a size which is smaller than that of the second screen image.

5. The method of claim 1, further comprising replacing the third screen image in which the first screen image and the second screen image are merged with the second screen image.

6. The method of claim 1, wherein a location where the first screen image is disposed on the corresponding area of the second screen image is at least one of specified by a user, determined randomly, and determined according to a blank area of the second screen image.

7. The method of claim 1, wherein the screen image comprises at least one of an image for a background, an image for a lock screen, and an image for a home screen.

8. The method of claim 1, wherein the first screen image comprises at least one of an image photographed through a camera, a tagged image, and a favorite image.

9. A method of changing a screen image in an electronic device, the method comprising:
sensing a screen image change event based on tag information of a first screen image;
adjusting a size of the selected first screen image when the screen image change event is generated;
disposing the first screen image on a corresponding area of a second screen image; and
displaying a third screen image in which the first screen image and the second screen image are merged.

10. The method of claim 9, further comprising:
merging the first screen image on the second screen image; and
storing the third screen image in which the first screen image and the second screen image are merged,
wherein the first screen image, the second screen image, and the third screen image are stacked up and stored in a memory by a stack structure.

11. The method of claim 9, wherein the adjustment of the size of the first screen image comprises resizing the first screen image to have a size which is smaller than that of the second screen image.

12. The method of claim 9, wherein the adjustment of the size of the first screen image comprises cropping a part of the first screen image to have a size which is smaller than that of the second screen image.

13. The method of claim 9, further comprising replacing the third screen image in which the first screen image and the second screen image are merged with the second screen image.

14. The method of claim 9, wherein a location where the first screen image is disposed on the corresponding area of the second screen image is at least one of specified by a user, determined randomly, and determined according to a blank area of the second screen image.

15. An electronic device, comprising: one or more processors; memory; and one or more programs, wherein the one or more programs are stored in the memory and configured to cause, when executed by the electronic device, the electronic device to perform the method of any of claims 1 to 14.
